Europäisches Patentamt

European Patent Office

Office européen des brevets

(11) Publication number: **0 041 407**
**B1**

# EUROPEAN PATENT SPECIFICATION

(45) Date of publication of patent specification: **11.09.85**

(21) Application number: **81302491.6**

(22) Date of filing: **04.06.81**

(51) Int. Cl.⁴: **H 01 B 7/28,** C 09 K 3/10

(54) **Improvements relating to metal sheathed elastomeric cables.**

(30) Priority: **04.06.80 GB 8018300**

(43) Date of publication of application:
**09.12.81 Bulletin 81/49**

(45) Publication of the grant of the patent:
**11.09.85 Bulletin 85/37**

(84) Designated Contracting States:
**DE NL SE**

(56) References cited:
**WO-A-80/00895**
**DE-A-2 216 139**
**FR-A-2 152 896**
**US-A-2 743 188**
**US-A-3 903 013**

(73) Proprietor: **PIRELLI GENERAL plc**
**40 Chancery Lane**
**London WC2A 1JH (GB)**

(72) Inventor: **White, Francis Thomas**
**6 Elmsleigh Gardens**
**Bassett Southampton Hampshire (GB)**

(74) Representative: **Spencer, Graham Easdale**
**A.A. Thornton & CO Northumberland House**
**303-306, High Holborn**
**London WC1V 7LE (GB)**

Courier Press, Leamington Spa, England.

## Description

This invention concerns improvements relating to metal sheathed elastomeric cables. Such cables, wherein the electrical insulation of the cable core comprises an elastomeric layer commonly extruded directly onto the cable core, are increasingly taking precedence over prior cables wherein the insulation of the cable is comprised by a built-up and commonly oil-impregnated layer of paper tape or the like.

Difficulties have been encountered in the exploitation of such cable manufacturing techniques on account of the susceptibility of the prime elastomeric insulating materials, such as cross linked polyethylene for example, to develop defects known as "water trees" when subjected to alternating current electrical stress in the presence even of only very small amounts of water. The presence of water trees in elastomeric insulating materials has been found to have a significant deteriorating influence on important electrical characteristics of the materials, particularly as the level of electrical stress applied to the materials is increased. Accordingly, it is desirable to minimise the risk of water tree development.

The conventional method of manufacturing elastomeric cable was to extrude the elastomeric material directly onto the cable core as it was passed continuously through the head of an extrusion machine and then to pass the coated cable through a curing stage, advantageously arranged as a catenary tube, wherein the coated cable was subjected to superheated steam for completing the cross-linking process. For very high voltage cables, the cure of synthetic dielectrics such as cross-linked polyethylene, using high pressure steam is being abandoned because of the associated production within the dielectric of moisture filled microvoids which may form nuclei for water treeing. Dry cure methods are instead being adopted wherein exposure of the elastomeric cable insulation to water is avoided and alternative "dry" curing media such as inert gases, silicone oils, eutectic salt mixtures, high energy irradiations etc. are employed. Such measures achieve a degree of success in reducing the extent of water treeing associated with the cable manufacturing process, but the problem nevertheless remains of water tree development during service use of the cable. The provision of a metal sheath on the cable reduces the risk of moisture invading the cable in use, but, should the metal sheath be ruptured, a significant risk arises of water tree development with consequent deterioration of the cable.

Proposals have been made for the longitudinal sealing of an elastomeric cable against the ingress of water by provision of a sealing material between the insulating elastomer and the metal cable sheath. In British Patent Specification No. 1 563 685 a proposal is made for use of a sealing material comprising cellulose powder.

In WO—A—80/00895, the occurrence of water trees in electric cables comprising one or more conductors provided with an insulating layer and optionally an inner and outer semi-conductive layer and a metal screen, is reduced by the provision of at least one separating layer around the metal screen and at least one outer layer of a paste material having a high degree of water resistance and in which one or more humidity reducing materials are incorporated. The separating layer prevents the ingress of water and of the oily materials of the paste. The paste may include a clay.

GB—A—1399350 describes a sheathed cable compound of strands of plastics insulated conductors, the interstices of which cable are filled with a water-blocking composition which is a gel. The gel may include a clay gellant.

The present invention provides an electric cable which comprises a conducting core, an elastomeric insulation layer formed around the core, a protective metal sheath around the insulation, and a water-resistant sealing composition which is between the core and the insulation and/or between the insulation and the sheath and/or within interstices between individual strands of the core where a multistrand conductor core is used, the sealing composition being a mastic material formed of colloidal clay, such as bentonite, dispersed in a liquid vehicle; characterised in that said vehicle is one which does not migrate out of the sealing composition into, and which is chemically inert towards, the adjacent insulation and core or sheath; and wherein the mastic is loaded with a semi-conducting material as to render the mastic electrically semi-conducting. Such a mastic material is in an elastomeric cable an effective sealant against water penetration. A preferred cable construction in accordance with the invention comprises a conductor sealed with such a sealing composition, crosslinked polyethylene insulated and with conductor and insulation screens, sealing composition and aluminium sheath, the latter being corrugated for enhanced cable flexibility.

As will be discussed in the following, such a filling compound has advantageous characteristics as regards mobility, water sensitivity, electrical properties and non-migratory tendencies which render it extremely suitable for incorporation into an elastomeric cable.

As regards mobility, the sealing composition should be capable of movement, particularly between the cable insulation and the metal sheath, to accommodate dimensional changes as the sheathed cable expands and contracts during thermal cycling, and yet should be sufficiently form stable, at least initially, as to allow ready application to and between the individual cable conductors during stranding of a multi-conductor core and/or to the insulated cable in the correctly metered quantity immediately prior to application of the metal cable sheath. By adjustment of the liquid vehicle to solids content ratio of the mastic, the mobility requirements can readily be achieved with a resultant material which can be pumped without difficulty.

The sealing composition should be water sensitive in that, when in the cable, adventitious ingress of water, caused for example by damage to the metal cable sheath, will bring about a swelling of the material sufficient to seal off the core and/or the sheath space at the water entry location. The use of a suitable colloidal clay such as bentonite as the principal solids content of the mastic is advantageous in this regard in that bentonite swells when contacted with water and can form an effective barrier against further moisture penetration along the core and/or along the space between the insulated core and the sheath.

In order to ensure electrical contact between the metal cable sheath and the conductor insulation wherever the two may touch, the sealing composition must be semiconducting with satisfactory semi-conductivity over the working temperature range of the cable. This requirement can be achieved by inclusion of appropriate amounts of conducting carbon black or conducting carbon black/graphite mixtures in the correct proportion. If the cable is correctly filled with the sealing composition according to the invention, then continuous longitudinal contact of the semi-conducting sealing composition with the metal sheath will result, with the advantage that the fault current carrying characteristics of the cable will be much improved as compared with the "unfilled" situation where only occasional and haphazard contact between the core insulation and the metal screen would occur.

Finally, it is essential that no component of the sealing composition should develop migratory tendencies. Physical changes to the cable core cannot be tolerated, and even small scale absorption into semi-conducting screens within the cable may produce an unacceptable rise in screen resistivity. Migration of the liquid component of the mastic is prevented by use of non-migratory liquids such as non-migratory PVC plasticisers.

The following lists the formulation of a currently preferred mastic:—

| | Parts by weight |
|---|---|
| Bentonite (Fulbent WT 208 PJ) | 35.0 |
| Modified Polypropylene Adipate | 17.5 |
| Pentaerythritol type plasticiser | 26.5 |
| Carbon black—Vulcan P | 17.5 |
| Graphite powder | 3.5 |

The above ingredients mix easily to form the required mastic which, on testing, has been found to demonstrate advantageous properties as described hereinbefore.

In use of such a mastic, a variable rate force feed pump may be employed to introduce the mastic between the wire component layers of a standard conductor and/or onto the cable core in precisely metered quantities immediately prior to the application to the cable of its metal sheath.

There has thus been described an improved sealing composition for incorporation into elastomeric cable as a barrier to ingress of moisture and consequent development of water trees and deterioration of the electrical characteristics of the cable.

## Claims

1. An electrical cable which comprises a conducting core, an elastomeric insulation layer formed around the core, a protective metal sheath around the insulation, and a water-resistant sealing composition which is between the core and the insulation and/or between the insulation and the sheath and/or within interstices between individual strands of the core where a multistrand conductor core is used, the sealing composition being a mastic material formed of colloidal clay, such as bentonite, dispersed in a liquid vehicle; characterised in that said vehicle is one which does not migrate out of the sealing composition into, and which is chemically inert towards, the adjacent insulation and core or sheath; and wherein the mastic is loaded with a semi-conducting material to render the mastic electrically semi-conducting.

2. A cable as claimed in claim 1, characterised in that said vehicle comprises a PVC plasticiser.

3. A cable as claimed in claim 1, wherein said mastic material comprises a mixture of bentonite, carbon black, and graphite dispersed in said liquid vehicle, characterised in that said liquid vehicle comprises modified polypropylene adipate and pentaerythritol type plasticiser.

## Patentansprüche

1. Elektrisches Kabel, bestehend aus einem leitenden Kern, einer um den Kern angeordneten elastomeren Isolierschicht, einer um die Isolierung angeordneten Metallschutzumhüllung und einer wasserbeständigen Dichtungsmasse, die zwischen dem Kern und der Isolierung und/oder zwischen der Isolierung und der Umhüllung und/oder in Zwischenräumen zwischen einzelnen Strängen des Kerns im Falle der Verwendung eines mehrstrangigen Leiterkerns angeordnet ist und aus einem Mastixmaterial besteht, das aus einem kolloidalen Ton, wie Bentonit, das in einem flüssigen Träger dispergiert ist, gebildet ist, dadurch gekennzeichnet, daß de Träger ein solcher ist, der aus der Dichtungsmasse nicht austritt und in die benachbarte Isolierung und den Kern oder die Umhüllung nicht eintritt und gegenüber diesen chemisch inert ist, und wobei der Mastix mit einem halbleitenden Material versetzt ist, um den Mastix elektrisch halbleitend zu machen.

2. Kabel nach Anspruch 1, dadurch gekennzeichnet, daß der Träger einen PVC-Weichmacher enthält.

3. Kabel nach Anspruch 1, bei dem das Mastixmaterial eine Mischung aus Bentonit, Ruß und Graphit enthält, die in dem flüssigen Träger dispergiert ist, dadurch gekennzeichnet, daß der flüssige Träger ein modifiziertes Polypropylenadipat une einen Weichmacher vom Pentaerythritol-Typ enthält.

**Revendications**

1. Câble électrique qui comprend une âme conductrice, une couche d'isolation en élastomère qui est formée autour de l'âme, une gaine métallique protectrice placée autour de l'isolation, et une composition d'étanchéité résistant à l'eau qui se trouve entre l'âme et l'isolation et, ou bien, entre l'isolation et la gaine et, ou bien, à l'intérieur des interstices existant entre chacun des torons de l'âme lorsqu'il est utilisé une âme conductrice à plusieurs torons, la composition d'étanchéité étant un matériau du type mastic formé d'une argile colloïdale, par exemple bentonite, dispersée dans un véhicule liquide; caractérisé en ce que ledit véhicule est un véhicule qui ne migre pas de la composition d'étanchéité dans l'isolation et l'âme ou la gaine voisines et qui est chimiquement inerte vis-à-vis d'elles; et où la mastic est chargé par un matériau semiconducteur visant à rendre le mastic électriquement semiconducteur.

2. Câble selon la revendication 1, caractérisé en ce que ledit véhicule comprend un plastifiant PVC.

3. Câble selon la revendication 1, où ledit matériau de type mastic comprend un mélange de bentonite, de carbon black, et de graphite dispersés dans ledit véhicule liquide, caractérisé en ce que ledit véhicule liquide comprend un plastifiant de type pentaérythritol et adipate de polypropylène modifié.